# EUROPEAN PATENT APPLICATION

(11) **EP 2 995 381 A1**
(43) Date of publication of application: **16.03.2016**
(21) Application number: 14184044.7
(22) Date of filing: 09.09.2014
(51) Int. Cl.: B01L 3/00, B65G 54/02, G01N 35/04

(54) **Set of sample container carriers for a laboratory sample distribution system, laboratory sample distribution system and laboratory automation system**

(71) Applicant: Roche Diagnostics GmbH, 68305 Mannheim (DE); F. Hoffmann-La Roche AG, 4070 Basel (CH)
(72) Inventor: Sinz, Achim, 71332 Waiblingen (DE)
(74) Representative: Patentanwälte Ruff, Wilhelm, Beier, Dauster & Partner mbB

(57) **Abstract**

The invention relates to a set of sample container carriers, a laboratory sample distribution system comprising such a set of sample container carriers, and to a laboratory automation system comprising such a laboratory sample distribution system. The set of sample container carriers comprises sample container carriers of a first type and a second type, wherein magnetic fields generated by respective magnetically active devices of the sample container carriers having the first type are oriented opposite to magnetic fields of respective magnetically active devices of the sample container carriers having the second type.

## Description

### Applicable field and prior art

The invention relates to a set of sample container carriers for a laboratory sample distribution system, a laboratory sample distribution system comprising such a set of sample container carriers and to a laboratory automation system comprising such a laboratory sample distribution system.

Laboratory automation systems typically comprise a number of analytical stations, for example pre-analytical, analytical and/or post-analytical stations. Such stations can be used in order to analyze samples such as blood samples or other medical samples and in order to perform corresponding tasks like decapping or centrifugation. A laboratory sample distribution system can be used in order to automatically distribute or transport sample containers between such laboratory stations, wherein a sample container typically comprises a sample. The sample containers are typically made of transparent plastic material or glass material and are typically embodied as a tube having an opening at the top side.

A typical laboratory sample distribution system is disclosed in WO 2011/138448 A1. Such a laboratory sample distribution system comprises a number of sample container carriers and a transport plane having a number of electro-magnetic actuators positioned below the transport plane, such that the electro-magnetic actuators can move the sample container carriers over the transport plane. Such laboratory sample distribution systems provide for a high throughput in laboratory automation systems.

### Object and solution

It is an object of the present invention to provide for set of sample container carriers, a laboratory sample distribution system and a laboratory automation system further increasing sample throughput.

This object is solved by a set of sample container carriers according to claim 1, a laboratory sample distribution system according to claim 4 and by a laboratory automation system according to claim 10.

The invention relates to a set of sample container carriers for a laboratory sample distribution system. The set of sample container carriers comprises a number (2 to 200) of sample container carriers having a first sample container carrier type and a number (2 to 200) of sample container carriers having a second sample container carrier type.

One or more sample container carriers of the set of sample container carriers are adapted to carry one or more sample containers. According to a specific embodiment, all sample container carriers of the set of sample container carriers are adapted to carry one or more sample containers. The ability to carry sample containers is independent of the sample container carrier type.

Each sample container carrier comprises at least one magnetically active device that is typically used to interact with a magnetic field generated by the electro-magnetic actuators, such that a drive force is caused to the sample container carrier.

A respective magnetic field generated by the magnetically active device of each of the sample container carriers having the first sample container carrier type is oriented opposite to a respective magnetic field generated by the magnetically active device of each of the sample container carriers having the second sample container carrier type.

By means of the inventive set of sample container carriers, it is possible to simultaneously move sample container carriers being positioned along a line having a distance corresponding to a distance between centers of the electro-magnetic actuators. This functionality is typically not possible when all sample container carriers moving on a transport plane have the same orientation of the respective magnetic fields generated by the respective magnetically active devices, as the attraction force of one electro-magnetic actuator will pull both sample container carriers to its center, what is their opposite direction and not to the same direction where they should move simultaneously.

It is to be understood that the orientation of a magnetic field is typically given by vectors defining the magnetic field. A magnetic field is defined by a plurality of vectors having a certain orientation and a certain amount or value, wherein the amount corresponds to the respective field strength. Such a plurality of vectors can also be called a vector field. When a magnetic field of a first magnet is oriented opposite to a magnetic field of a second magnet, this can, for example, mean that vectors of a vector field defining the magnetic field of the first magnet are reversed to vectors of a vector field defining the magnetic field of the second magnet.

It should be understood that according to a typical embodiment, the magnetic fields generated by the magnetically active devices of the sample container carriers having the first sample container carrier type differ from the magnetic fields generated by the magnetically active devices of the sample container carriers having the second sample container carrier type by 180°.

According to an embodiment, the sample container carriers each comprise a permanent (bar) magnet as its respective magnetically active device. In such a case, generation of an opposite magnetic field can, for example, be accomplished by rotating the permanent (bar) magnet about a horizontal axis by 180°.

According to an embodiment, the permanent magnet is adapted to be rotated with respect to the rest of the sample container carrier by 180°. This can, for example, be accomplished by providing a possibility to rotate the magnet inside the sample container carrier, or to provide for a possibility to take out the magnet out of the sample container carrier, to rotate the magnet, and to insert the magnet into the sample container carrier. This allows for an adaptation of the orientation of a magnetic field generated by a magnetically active device of a sample container carrier according to actual needs in order to increase system throughput. For example, if a line of sample container carriers should be arranged in which each pair of neighboring sample container carriers has opposite magnetic fields of its respective magnetically active devices, some magnets can be rotated in order to provide for an equal number of sample container carriers having each of the two orientations of the magnetic fields. The system may have a sufficient number of sample container carriers having corresponding orientations of the permanent magnets. Each sample container carrier may comprise an identification (e.g. RFID) such that the system knows the orientation of the permanent magnet within the sample container carrier in order to control/trigger the electro-magnetic actuator with the correct magnetic field.

According to an embodiment, each magnetic field generated by a magnetically active device corresponds to a magnetic field generated by a coil having a vertical axis. It can also correspond to a magnetic field generated by a bar magnet. Such magnetic fields are typically represented as vector fields, such that an orientation can be determined. The fields may leave a coil or a bar magnet approximately vertically, wherein typically vectors of the magnetic field having a larger distance from the magnetically active device above or below the coil or bar magnet are more inclined compared with vectors closer to the magnetically active device.

According to an embodiment, the sample container carriers each comprise an electro-magnet as its magnetically active device. With such an electro-magnet, both the orientation and the strength of the magnetic field can be adjusted even during operation. According to an embodiment, each sample container carrier comprises means for switching an orientation of a magnetic field generated by the electro-magnet by 180°. Such a means may, for example, be adapted as a switch for inverting current flow through a coil comprised by the electro-magnet.

According to an embodiment, one or more sample container carriers having the first sample container carrier type and one or more sample container carrier having the second sample container carrier type are concatenated to form a single composite sample container carrier; the concatenation may be realized by detachable couplings between the sample container carriers. This allows for using magnetically active devices of both orientations, for example two magnetically active devices of opposite orientations, in a single composite sample container carrier. The magnetically active devices of such composite sample container carriers can be treated by a control unit similarly to treating two adjacent independent sample container carriers. A composite sample container carrier being concatenated as just described may comprise one or more holding means for sample containers. For example, it may be embodied as a rack for holding a plurality of sample containers.

The invention relates further to a laboratory sample distribution system. The laboratory sample distribution system comprises a set of sample container carriers according to the invention.

The laboratory sample distribution system further comprises a transport plane, being adapted to support the sample container carriers. Below the transport plane, a number of electro-magnetic actuators are arranged, the electro-magnetic actuators being adapted to move the sample container carriers on top of the transport plane by applying a magnetic force to the sample container carriers. The laboratory sample distribution system further comprises a control unit, which is configured to control the movement of the sample container carriers on top of the transport plane by driving the electro-magnetic actuators such that the sample container carriers move along corresponding transport paths.

The control unit can be implemented, for example, as a microcontroller, a microprocessor, an Application Specific Integrated Circuit (ASIC) or another programmable device. Especially the control unit may comprise processor means and memory means, wherein code is stored in the memory means controlling the behavior of the processor means.

By means of an inventive laboratory sample distribution system, throughput can be increased because it is possible to simultaneously move sample container carriers being arranged along a line with a distance corresponding to a distance between centers of adjacent electro-magnetic actuators. This can, for example, be accomplished by embodiments as discussed further below.

According to an embodiment, the control unit is configured to drive the electro-magnetic actuators such that in at least one line of adjacent electro-magnetic actuators magnetic fields generated by each pair of directly adjacent electro-magnetic actuators are oriented opposite to each other. Regarding definitions of orientation, reference is made to the statements regarding orientation of magnetic fields given above with respect to magnetic fields generated by magnetically active devices of the sample container carriers.

Having magnetic fields of adjacent electro-magnetic actuators oriented opposite to each other allows for simultaneous movement of a plurality of sample container carriers having alternating types and being arranged in a line. Thus, each sample container carrier is attracted by one electro-magnetic actuator and is repulsed by another electro-magnetic actuator. Such a simultaneous movement would not be possible if the magnetic fields of the magnetically active devices of all sample container carriers would have the same orientation, because in such a case an attractive magnetic force exerted on a certain sample container carrier would inadvertently lead to an attractive magnetic force on another sample container carrier pointing in an undesired direction.

According to an embodiment, the control unit is configured to drive the electro-magnetic actuators such that a number of sample container carriers being arranged along a line of electro-magnetic actuators and having a distance corresponding to a distance between the electro-magnetic actuators move simultaneously. This is an operation that is possible when an inventive set of sample container carriers is used. It allows for a high throughput, because a plurality of sample container carriers can move simultaneously with a minimum distance between the sample container carriers. Further, by means of one electro-magnetic filed a force on two sample container carriers moving to the same direction may be caused. Therefore the entire system will need less power to move the same amount of sample container carriers.

A distance between electro-magnetic actuators may be understood as a distance between respective centers of electro-magnetic actuators.

According to an embodiment, the control unit is configured to drive the electro-magnetic actuators such that a number of sample container carriers being arranged in a field move simultaneously, wherein adjacent sample container carriers arranged in the field have a distance corresponding to a distance between the electro-magnetic actuators in one or two directions. This allows for simultaneous movement of a two-dimensional field of sample container carriers.

According to an embodiment, the control unit is configured to receive or determine the type of a sample container carrier, and to adjust its driving of the electro-magnetic actuators in response to the determined type. For example an orientation of the magnetic field generated by an electro-magnetic actuator may be generated in a first direction for the first type and may be generated in a second direction, opposite to the first direction for the second type. The type can, for example, be received from an RFID tag or another wireless communication means installed in the sample container carrier. It can also be determined, for example, by Hall-sensors or other magnetic sensors. Knowledge about the respective type allows for an efficient handling of the sample container carriers by the control unit with a high throughput.

According to an embodiment, the control unit is configured to move a number of sample container carriers such that the sample container carriers are aligned along a line of electro-magnetic actuators, wherein a distance between adjacent sample container carriers corresponds to a distance between the electro-magnetic actuators. Magnetic fields generated by each pair of magnetically active devices of directly adjacent sample container carriers are oriented opposite to each other. The control unit is, according to this embodiment, configured to move the sample container carriers simultaneously along a common path or line.

This embodiment allows for an effective routing of a plurality of sample container carriers that have to travel a similar path. For example, similar paths can be understood as paths originating in a certain region on the transport plane and ending in another, distant region on the transport plane. By means of this embodiment, it is possible to align sample container carriers having similar paths such that they can move simultaneously and thus require a minimum space on the transport plane and a minimum of time in order to come to their destination.

According to an embodiment, the laboratory sample distribution system comprises a loading station adapted to perform one or more of the following tasks:
- loading of sample containers on sample container carriers,
- unloading of sample containers from sample container carriers,
- filling samples in sample containers,
- extracting samples from sample containers.

The loading station is adapted for parallel operation with a plurality of sample containers each being assigned to a sample container carrier, the sample container carriers being aligned along a line of electro-magnetic actuators such that a distance between adjacent sample container carriers corresponds to a distance between the electro-magnetic actuators.

By means of this embodiment it is possible to load or unload samples or sample containers in parallel on or from a plurality of sample container carriers. Typically, a region corresponding to the loading station is defined on the transport plane, wherein a plurality of sample container carriers can be positioned in that region that can be operated by the loading station in parallel. The sample container carriers can be moved simultaneously in that region, especially if two adjacent sample container carriers have opposite magnetic fields.

According to an embodiment, the laboratory sample distribution system comprises means for inverting a magnetic field of magnetically active elements. Such means can, for example, comprise means for taking out a permanent magnet from a sample container carrier, and to rotate and re-insert the permanent magnet. This allows for controlling respective orientations of electro-magnetic fields such that the sample container carriers can be operated as effectively as possible.

The invention further relates to a laboratory automation system, comprising a number of a pre-analytical, analytical and/or post-analytical (laboratory) stations, and a laboratory sample distribution system as described above adapted to transport the sample container carriers and/or sample containers between the stations. The stations may be arranged adjacent to the laboratory sample distribution system.

Pre-analytical stations may be adapted to perform any kind of pre-processing of samples, sample containers and/or sample container carriers.

Analytical stations may be adapted to use a sample or part of the sample and a reagent to generate a measuring signal, the measuring signal indicating if and in which concentration, if any, an analyte is existing.

Post-analytical stations may be adapted to perform any kind of post-processing of samples, sample containers and/or sample container carriers.

The pre-analytical, analytical and/or post-analytical stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, and a sealing/desealing station.

### Short description of the drawings

The invention will be described in detail with respect to the drawing schematically depicting an embodiment of the invention. In detail:
- Fig. 1: shows a laboratory automation system comprising a laboratory sample distribution system, and
- Fig. 2: shows a part of the laboratory sample distribution system in a sectional view.

### Detailed description of the embodiment

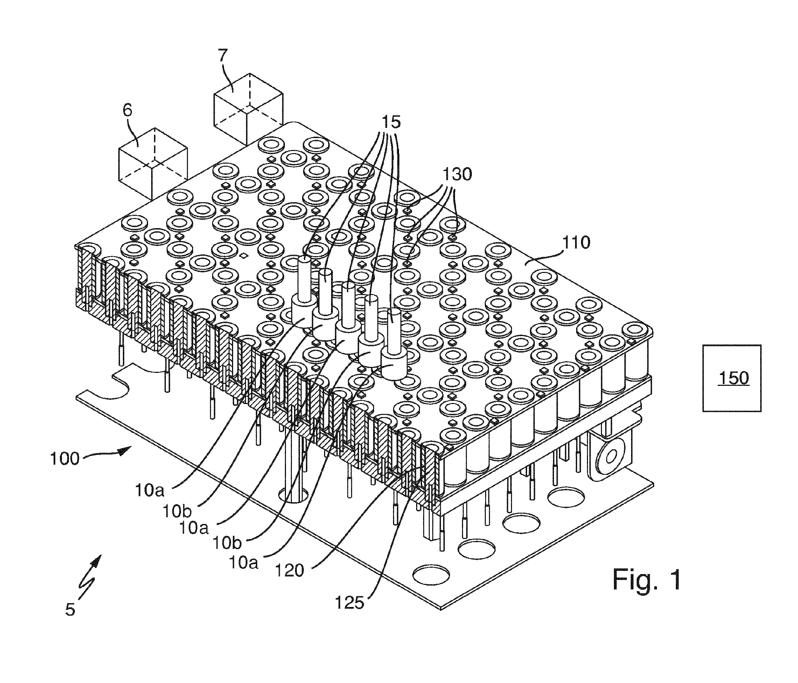

Fig. 1 shows a laboratory automation system 5 comprising a first laboratory station 6, a second laboratory station 7 and a laboratory sample distribution system 100. The laboratory stations 6, 7 are adapted to perform certain analytical, pre-analytical and/or post-analytical tasks.

The laboratory sample distribution system 100 is adapted to move sample container carriers 10a, 10b between the laboratory stations 6, 7 and other equipment not shown in fig. 1. It should be noted that typically a laboratory sample distribution system 100 can operate in connection with more than two laboratory stations 6, 7.

The laboratory sample distribution system 100 comprises a transport plane 110, on which sample container carriers 10a, 10b can move. Three sample container carriers 10a and two sample container carriers 10b are shown exemplarily.

Under the transport plane 110, a plurality of electro-magnetic actuators 120 are arranged. Each electro-magnetic actuator 120 comprises a ferromagnetic core 125. The electro-magnetic actuators 120 are aligned in a vertical orientation.

In order to determine respective positions of the sample container carriers 10a, 10b, a plurality of Hall-sensors 130 is distributed over the transport plane 110.

The laboratory sample distribution system 100 comprises a control unit 150, which is adapted to control the electro-magnetic actuators 120 such that the sample container carriers 10a, 10b move on respective transport paths. For this task, the control unit 150 receives and uses information from the Hall-sensors 130 in order to determine the positions of the sample container carriers 10a, 10b.

Each sample container carrier 10a, 10b holds a respective sample container 15, wherein each sample container 15 is filled with a respective medical sample that should be analyzed using the laboratory stations 6, 7.

The control unit 150 is configured to simultaneously move the sample container carriers 10a, 10b shown in fig. 1 arranged in a line with a distance between the sample containers 10a, 10b corresponding to respective distances between the electro-magnetic actuators 120.

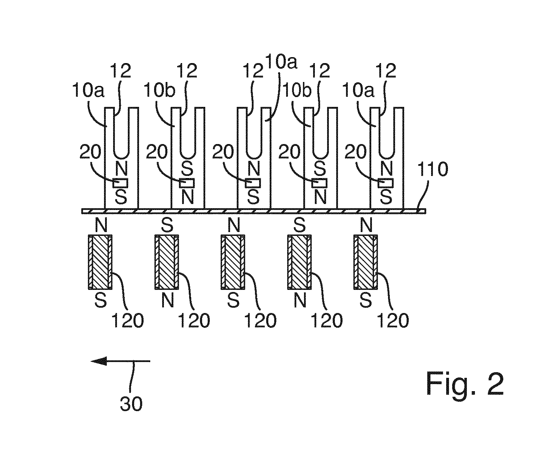

Fig. 2 shows a partial sectional view of the laboratory sample distribution system 100 shown in fig. 1. The sample container carriers 10a, 10b are arranged along a line. As depicted, each sample container carrier 10a, 10b comprises a sample container holding means 12, which is adapted to hold a respective sample container. However, the sample containers are not shown in fig. 2.

The sample containers 10 are arranged on the transport plane 110. Below the transport plane 110 five of the electro-magnetic actuators 120 are shown schematically.

Each of the sample container carriers 10a, 10b comprises a respective magnetically active device in the form of a permanent bar magnet 20. The respective permanent magnet 20 of the sample container carriers 10a is oriented such that the north pole faces away from the transport plane 110. The respective permanent magnet 20 of the sample container carriers 10b is oriented such that the north pole faces towards transport plane 110. In each case, an axis connecting north pole and south pole of the respective permanent magnet 20 is aligned in a vertical direction.

The sample container carriers 10a, 10b form a set of sample container carriers 10a, 10b. The set of sample container carriers comprises three sample container carriers 10a having a first type and two sample container carriers 10b having a second type. The sample container carriers 10a having the first type comprise a permanent magnet 20 having a north pole at the upper side, and the sample container carriers 10b having the second type comprise a permanent magnet 20 having a north pole at the lower side.

As depicted in fig. 2, the permanent magnets 20 of the sample container carriers 10a, 10b are arranged such that two permanent magnets 20 of adjacent sample container carriers 10a, 10b generate opposite magnetic fields. In other words, permanent magnets 20 having north pole and south pole at the upper side alternate along the extension of the line in which the sample container carriers 10a, 10b are arranged.

In order to drive the sample container carriers 10 along a direction of movement that is shown by an arrow 30 in fig. 2, the electro-magnetic actuators 120 are energized by the control unit 150 such that north poles and south poles at the upper side and at the lower side alternate along the line in which the electro-magnetic actuators 120 are arranged.

Regarding, for example, the sample container carrier 10a and the electro-magnetic actuator 120 that are arranged at the left side of fig. 2, it is seen that a north pole of the electro-magnetic actuator 120 faces a south pole of the permanent magnet 20 of the sample container carrier 10a. Consequently, the sample container carrier 10a will be attracted to the left. Regarding other pairs of sample container carriers 10a, 10b and electro-magnetic actuators 120, the same applies with alternating poles. Consequently, the whole line of sample container carriers 10 will be attracted to the left simultaneously.

Thus, the control unit 150 is able to energize the electro-magnetic actuators 120 sample container carrier type dependent such that sample container carriers 10a, 10b arranged in a line can move simultaneously without a need for gaps between the sample container carriers 10a, 10b. This allows for a high throughput of the laboratory sample distribution system 100. In order to implement this functionality, the control unit 150 is configured to maintain a database about the sample container carriers 10 of the laboratory sample distribution system 100, wherein the database contains information about respective orientations of the permanent magnets 20 of the sample container carriers 10a, 10b, i.e. the respective types of the sample container carriers 10a, 10b.

## Claims

1. Set of sample container carriers (10a, 10b) for a laboratory sample distribution system (100),
- wherein the set of sample container carriers (10a, 10b) comprises sample container carriers (10a) having a first sample container carrier type and sample container carriers (10b) having a second sample container carrier type,
- wherein the sample container carriers (10a, 10b) comprised in the set of sample container carriers (10a, 10b) are adapted to carry one or more sample containers (15), and
- wherein the sample container carriers (10a, 10b) comprised in the set of sample container carriers (10a, 10b) comprise at least one magnetically active device (20),
- wherein a magnetic field generated by the magnetically active device (20) of each of the sample container carriers (10a) having the first sample container carrier type is oriented opposite to a magnetic field generated by the magnetically active device (20) of each of the sample container carriers (10b) having the second sample container carrier type.

2. Set of sample container carriers (10a, 10b) according to claim 1,
**characterized in that**
- the magnetically active device (20) is a permanent magnet.

3. Set of sample container carriers (10a, 10b) according to claim 1 or 2,
**characterized in that**
- a sample container carrier (10a) having the first sample container carrier type and a sample container carrier (10b) having the second sample container carrier type are concatenated to form a composite sample container carrier.

4. Laboratory sample distribution system (100), comprising:
- a set of sample container carriers (10a, 10b) according to one of the preceding claims,
- a transport plane (110), being adapted to support the sample container carriers (10a, 10b) comprised in the set of sample container carriers (10a, 10b),
- a number of electro-magnetic actuators (120), being stationary arranged below the transport plane (110), the electro-magnetic actuators (120) being adapted to move the sample container carriers (10a, 10b) comprised in the set of sample container carriers (10a, 10b) on top of the transport plane (110) by applying a magnetic force to the sample container carriers (10a, 10b) comprised in the set of sample container carriers (10a, 10b), and
- a control unit (150), being configured to control the movement of the sample container carriers (10a, 10b) comprised in the set of sample container carriers (10a, 10b) on top of the transport plane (110) by driving the electro-magnetic actuators (120) such that the sample container carriers (10a, 10b) comprised in the set of sample container carriers (10a, 10b) move along corresponding transport paths.

5. Laboratory sample distribution system (100) according to claim 4,
**characterized in that**
- the control unit (150) is configured to drive the electro-magnetic actuators (120) such that in at least one line of adjacent electro-magnetic actuators (120) magnetic fields generated by each pair of directly adjacent electro-magnetic actuators (120) are oriented opposite to each other.

6. Laboratory sample distribution system (100) according to claim 4 or 5,
**characterized in that**
- the control unit (150) is configured to drive the electro-magnetic actuators (120) such that a number of sample container carriers (10a, 10b) being arranged along a line of electro-magnetic actuators (120) and having a distance corresponding to a distance between the electro-magnetic actuators (120) move simultaneously.

7. Laboratory sample distribution system (100) according to one of claims 4 to 6, **characterized in that**
- the control unit (150) is configured to drive the electro-magnetic actuators (120) sample container carrier type dependent.

8. Laboratory sample distribution system (100) according to one of claims 4 to 7, **characterized in that**
- the control unit (150) is configured to move a number of sample container carriers (10a, 10b) such that the sample container carriers (10a, 10b) are aligned along a line of electro-magnetic actuators (120), such that a distance between adjacent sample container carriers (10a, 10b) corresponds to a distance between the electro-magnetic actuators (120), such that magnetic fields generated by each pair of magnetically active devices (20) of directly adjacent sample container carriers (10a, 10b) are oriented opposite to each other, and such that the sample container carriers (10a, 10b) move simultaneously along a common path.

9. Laboratory sample distribution system (100) according to one of claims 4 to 8, **characterized in that**
- the laboratory sample distribution system (100) comprises a loading station adapted to perform one or more of the following tasks:
- loading of sample containers (15) on sample container carriers (10a, 10b),
- unloading sample containers (15) from sample container carriers (10a, 10b),
- filling samples in sample containers (15), and
- extracting samples from sample containers (15),
- wherein the loading station is adapted for parallel operation with a plurality of sample containers (15) each being assigned to a sample container carrier (10a, 10b), the sample container carriers (10a, 10b) being aligned along a line of electro-magnetic actuators (120), such that a distance between adjacent sample container carriers (10a, 10b) corresponds to a distance between the electro-magnetic actuators (120).

10. Laboratory automation system (5), comprising:
- a number of laboratory stations (6, 7), preferably pre-analytical, analytical and/or a post-analytical stations, and
- a laboratory sample distribution system according to one of claims 4 to 9 adapted to distribute the sample container carriers between the stations (6, 7).
